# EUROPEAN PATENT APPLICATION

(11) **EP 1 398 061 A2**
(43) Date of publication of application: **17.03.2004**
(21) Application number: 03077657.9
(22) Date of filing: 25.08.2003
(51) Int. Cl.: A63B 71/08, A61C 7/36, B32B 27/32, B32B 27/08

(54) **Oral appliance suitable for use as mouth guard**

(30) Priority: 30.08.2002 US 232240
(71) Applicant: Farrell, Christopher John, Helensvale, QLD 4210 (AU)
(72) Inventor: Farrell, Christopher John, Helensvale, QLD 4210 (AU)
(74) Representative: Romare, Laila Anette

(57) **Abstract**

A sports guard for fitting over the upper arch and teeth of a user is disclosed. The sports guard comprises broadly a base member of polyethylene and a layer of EVA encasing the polyethylene. The polyethylene and EVA show a surprising and unexpected affinity for each other. They are able to flex with each other and be heated and cooled without delaminating. This provides a solution to a longstanding problem in this art.

## Description

### FIELD OF THE INVENTION

This invention relates to an oral or mouth appliance and to a method of making the appliance.

This invention relates particularly but not exclusively to an oral appliance that is a sports guard for protecting the teeth of a user in contact sports such as boxing, football, gridiron and rugby. It will therefore be convenient to hereinafter describe the invention with reference to this example application. It is to be clearly understood-however that the invention is capable of broader application. For example the invention also extends to an appliance that is an orthodontic appliance.

### BACKGROUND TO THE INVENTION

Customised sports mouthguards are known. Typically they are made by taking a mould or impression of a user's mouth and then moulding the guard individually from this impression to fit the specific and unique mouth of the user. While these customised guards obviously fit well, it will be readily understood that this method of making sports guards is expensive as each guard is made to custom fit the user's mouth.

Mass produced sports guards are also known. However often they do not produce a close fit and the protection that they provide is reduced as a result. This has limited their acceptance in the market place despite a clear need for an efficacious mass produced sports guard.

A further limitation of existing custom made and mass produced sports guards is that they are relatively soft and they offer only limited protection to the front teeth. If a blow strikes the front of the mouthguard the guard tends to deform so that the brunt of the blow is borne by the front teeth. This makes the front teeth vulnerable to being damaged or dislodged. It would be better if the force was transferred to all the teeth and particularly through to the back teeth that are more firmly anchored to the jaw than the front teeth.

Clearly it would be advantageous if a guard could be devised that had the strength and rigidity to transfer the force rearwardly so that the force is spread over all the teeth and particularly the back teeth. Clearly it would also be advantageous if a guard could be devised that had the fit of a custom made guard but that was mass produced and easy to fit in a domestic environment.

It is an object of the invention to provide a sports guard that ameliorates at least some of the shortcomings of the prior art described above.

### SUMMARY OF THE INVENTION

According to one aspect of this invention there is provided an oral appliance for placing in a mouth of a user, the appliance comprising:
a base member having a generally U-shaped form corresponding to the outline of a jaw of a user, the base member defining at least one channel within which an upper or lower row of teeth of a user can be received, wherein the base member is formed at least primarily from a rigid plastics material which is polyethylene which is not user conformable or mouldable in boiling water; and
a teeth engaging element, associated with each channel, being made of a material able to be user conformed or user moulded to suit the individual mouth of the user, the base member having a greater rigidity than the teeth engaging element.

The teeth engaging element may be made of a continuous layer of thermoplastic material that encompasses the base member to firmly and securely mount the layer of thermoplastic material on the base member. Advantageously the continuous layer of thermoplastics material substantially covers the complete surface area of the base member. Preferably the layer of thermoplastic material comprises EVA (ethylvinylacetate) which softens at a temperature of 90°C - 95°C.

The layer of thermoplastic material forming the teeth engaging elements may have a thickness of 1 mm - 4mm, preferably 1 mm - 3mm, eg about 2mm. A layer of thermoplastic material of this thickness ensures that the appliance is not overly bulky.

Typically the layer of EVA softens at a temperature of 90°C to 95°C, eg by placing it in a glass of boiling water which is available in any domestic or office environment. The layer of thermoplastic material can then be shaped by placing it in the mouth of a user while it is still malleable and formable and then allowing it to set by letting it cool back to room temperature.

The base member which is formed primarily of polyethylene may further include a thermoplastic material, having greater flexibility than polyethylene, eg EVA, mixed in with the polyethylene.

The base member may not have more than 20% by weight of thermoplastics material mixed in with the rigid plastics material. Preferably the base member comprises not more than 10% by weight of a thermoplastic material, more preferably 2-9 % by weight of the thermoplastic material, and most preferably 4-8% by weight of the thermoplastic material. Preferably the thermoplastic material that is mixed into the base member is EVA.

Alternatively the base member may consist essentially of polyethylene, eg solely of polyethylene.

Thus the appliance, eg sports guard, comprises a base member made mainly of polyethylene which provides a basic shape and rigidity encased within a layer of thermoplastic material EVA. The layer of thermoplastic EVA can be heated to a temperature at which it is soft and formable and then conformed to the shape of the arch and teeth of a user.

The applicant has been the first to discover the surprising and unexpected affinity and compatibility that polyethylene has for EVA. The materials have the ability to flex in harmony with each other without delamination. They also remain together when subjected to some level of heating and cooling, eg to shape the EVA. Previously for applications requiring flexing it was thought that satisfactory bonding of an EVA layer to a base member could only be achieved by having a thermoplastic material as the base member, albeit of higher softening point than the EVA layer. The belief was that thermoplastic material would only be compatible with other thermoplastic material.

The base member confers a suitable level of rigidity on the base member but does have some flexibility in the direction of length of the channel, eg from front to rear thereof, and this enables the guard to accommodate arches of varying width. The compatibility of the EVA layer to the polyethylene together with encasement of the base member within the layer of EVA provides a guard that resists delamination during use. Delamination is a problem that has plagued previous efforts to use thermoplastics materials in a mouth appliance that can be adapted to the jaw and teeth of a user.

The base member may have inner and outer flanges interconnected by a web which collectively define upper and lower channels within which the upper and lower rows of teeth of the user are receivable, and an upper teeth engaging element may be received in the upper channel and a lower teeth engaging element may be received in the lower channel.

Alternatively the base member may have inner and outer flanges interconnected by a web which collectively define an upper channel within which the upper row of teeth of the user are receivable, and an upper teeth engaging element may be received in the upper channel.

The appliance may include a tongue tag formed on the inner flange of the base member, the tongue tag being substantially centrally positioned for correctly positioning the tongue of a user during use. Further the base member may have breathing apertures defined therein for facilitating breathing by a user when wearing the appliance. The base member may also define a cut-out or recess positioned broadly centrally in the outer flange for permitting the spacing of opposing sides of the base member to be adjusted.

The web of the base member may thicken in a direction rearwardly along each side thereof from the leading end or front of the base member. Preferably the web thickens in a direction rearwardly to a point spaced a short distance from the rear of the base member and then thins from the point to the rear end. This thickening fills in the space between the upper and lower teeth in an appliance with both upper and lower channels.

According to yet another aspect of the invention there is provided an oral appliance, comprising:
a base member made of polyethylene having a generally U-shaped form corresponding to the outline of the arch of a user, the base member having inner and outer flanges interconnected by a web that defines at least one channel within which a row of teeth of a user are received; and
a continuous layer of thermoplastic material that is EVA that surrounds and encases the base member and attaches to the base member whereby to define a teeth engaging element within each channel, the thermoplastic material being capable of being moulded and shaped to suit the arch and teeth of a user which are received therein by heating to a certain temperature.

According to yet another aspect of this invention there is provided a method of manufacturing an oral appliance for placing in the mouth of a user, the method comprising:
moulding a base member from plastic material in a first moulding step in a first mould, the member having a generally U-shaped form corresponding to the outline of the jaw of a user and inner and outer flanges interconnected by a web which define at least one of upper and lower channels within which the corresponding rows of teeth of a user are received, wherein the base member is formed at least primarily from a rigid plastic material which is polyethylene; and
moulding a continuous layer of thermoplastic material onto the base member to form said at least one of upper and lower teeth engaging elements capable of being customised to suit the mouth of a user, the layer encasing the base member to thereby firmly and securely mount the layer of thermoplastic material on the base member.

The continuous layer of thermoplastic material may be moulded onto the base member in the first mould after the first moulding step so that the thermoplastic material covers the base member that has just been moulded in the first moulding step. Alternatively the base member may be removed from the first mould after the moulding thereof and placed in a second mould having a larger mould cavity, and then said continuous layer of plastics material may be moulded onto said base member. The continuous layer of thermoplastic material may be moulded substantially fully across the surface area of the base member in said second moulding step. The layer of thermoplastic material may be formed of EVA.

Thus the base member of rigid non-thermoplastics material is moulded in a first moulding step and then the layer of thermoplastics material is moulded onto the base member in a second moulding step. It is important that the base member has sufficient rigidity not to move when it is exposed to moulding forces in the second moulding step.

Applicant has found that polyethylene either alone or in combination with an amount of less than 20% by weight of EVA, preferably less than 10% by weight of EVA, has sufficient rigidity to withstand the forces of the second moulding step. At the same time it has the rigidity to perform its function in use as a sports guard while still having some flexibility.

The base member may be injection moulded in a first die or mould defining the shape of the base member. Thereafter the base member may be removed from the first die or mould and held in a specific position is a second mould or die defining the shape of the layer of EVA on the base member. It is important that the base member be held firmly in a stationary position in the die for the layer to be successfully moulded onto it. It is also important that the base member is sufficiently rigid not to flex or bend when it is exposed to the pressure of injection moulding the layer.

The second die or mould may include positioning elements such as pins that hold the base member securely in position.

According to yet another aspect of the invention there is provided a method of making an oral appliance, the method including:
moulding a base member from polyethylene in a first moulding step in a first mould, the member having a generally U-shaped form corresponding to the outline of the jaw of a user and inner and outer flanges interconnected by a web that defines at least one channel within which an arch and associated row of teeth of a user are received; and
removing the base member from the first mould and placing it in a second mould having a larger cavity than the first mould and moulding a continuous layer of thermoplastic material that is EVA onto the base member so that the base member is encased by and enclosed within the EVA to form a teeth engaging element within each channel that can be formed and shaped to suit the mouth of a user, the layer encasing the base member and bonding to the base member to form an integral body that resists delamination during use.

According to another aspect of the invention there is provided a base member for an oral appliance for placing in a mouth of a user, the base member having a generally U-shaped form corresponding to the outline of a jaw of a user, and defining at least one channel within which an upper or lower row of teeth of a user can be received, wherein the base member is formed primarily of a rigid plastics material which is polyethylene.

According to another aspect of this invention there is provided a mouldable teeth engaging element for co-operation with a base member as described above for an oral appliance, the element being made of a material able to be user conformed or user moulded to suit the individual mouth of the user.

According to another aspect of this invention there is provided a method of fitting an oral appliance, as described in the earlier aspects of the invention above, comprising the step of immersing the oral appliance in water having a temperature sufficiently high to make the teeth engaging element mouldable,
inserting the appliance into a user's mouth;
biting into the teeth engaging element to mould the teeth engaging element to the form of the user's jaw, and thereafter allowing the teeth engaging element to harden.

Specifically the method may include putting the appliance into a user's mouth before partaking of any activity whereby use of a mouthguard is desirable.

### DETAILED DESCRIPTION OF THE PREFERRED EMBODIMENT

An oral appliance in accordance with this invention may manifest itself in a variety of forms. It will be convenient to hereinafter describe in detail several preferred embodiments of the invention with reference to the accompanying drawings. However it is to be clearly understood that the specific nature of this description does not supersede the generality of the preceding broad description of the invention. In the drawings:
Fig 1 is a front three dimensional view of an oral appliance in accordance with one embodiment of the invention;
Fig 2 is a rear three dimensional view of the oral appliance of Fig 1;
Fig 3 is a part sectional side view of the appliance of Fig 1;
Fig 4 is a front three dimensional view of the base member of the appliance of Fig1; and
Fig 5 is a rear three dimensional view of the base member of Fig 4;
Fig 6 is a front three dimensional view of an appliance in accordance with a second embodiment of the invention;
Fig 7 is a rear three dimensional view of the appliance of Fig 6;
Fig 8 is a part sectional side view of the appliance of Fig 6;
Fig 9 is a front three dimensional view of the base member of the appliance of Fig 6;
Fig 10 is a rear three dimensional view of the base member of Fig 9;
Fig 11 is a sectional side view of the base member of Fig 9;
Fig 12 is a top plan view of an appliance that is a sports guard for fitting over the upper arch of a user;
Fig 13 is a side view of the appliance of Fig 12; and
Figs 14 and 15 are sectional views through a section of a base member of the appliance, sections through XIV - XIV and XV - XV.

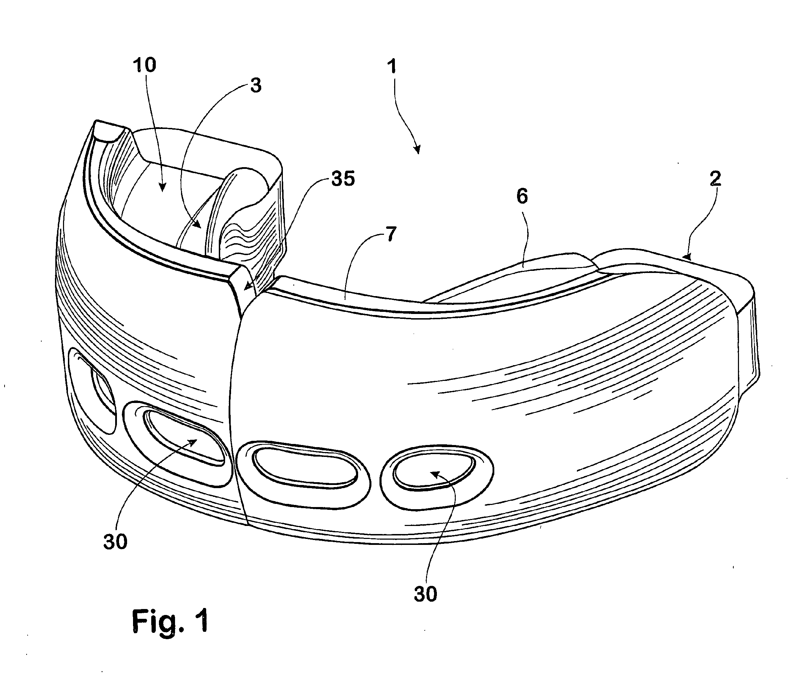

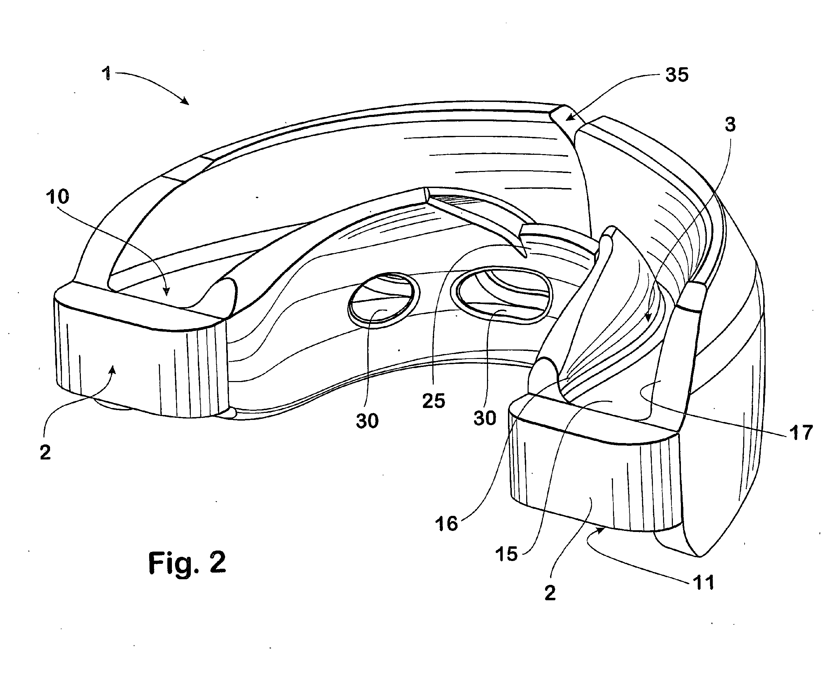

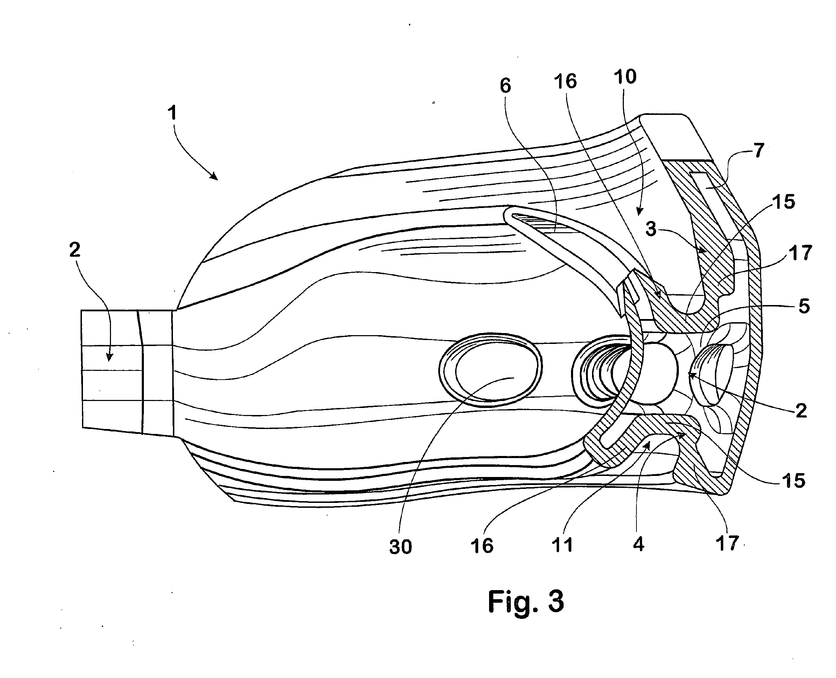

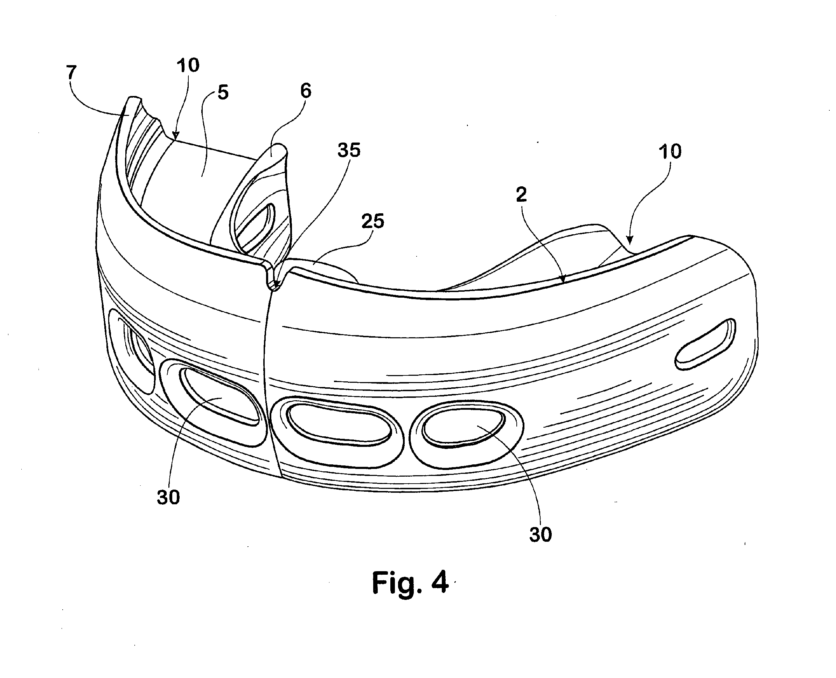

In Figs 1 to 4 reference numeral 1 refers generally to an appliance which may be a sports mouthguard in accordance with the invention.

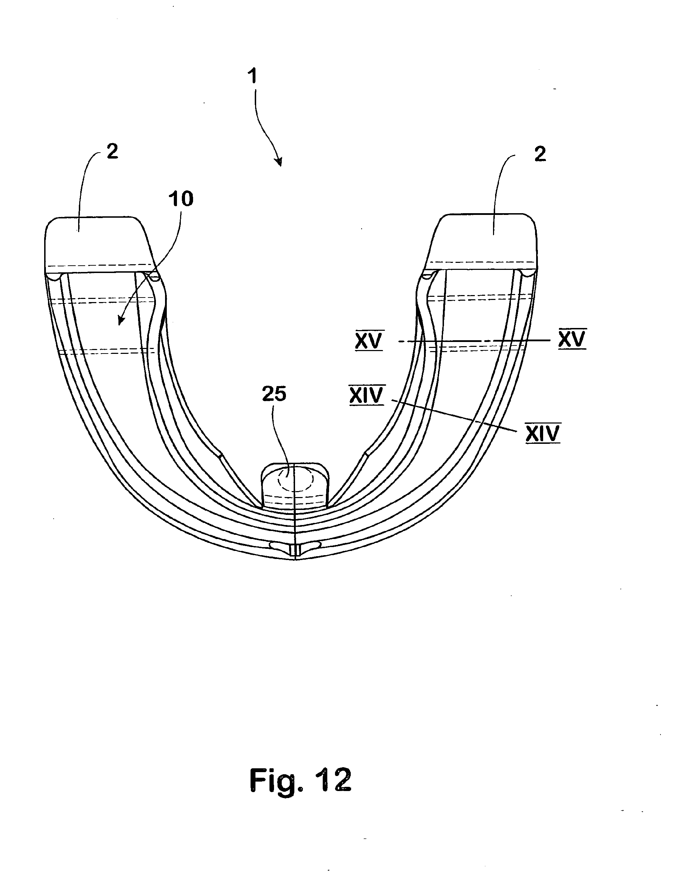

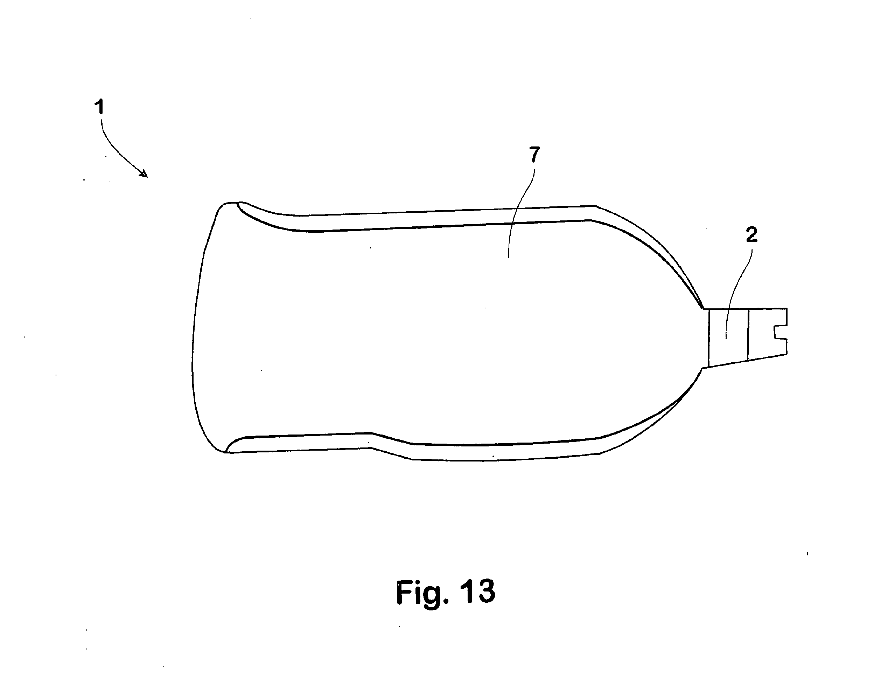

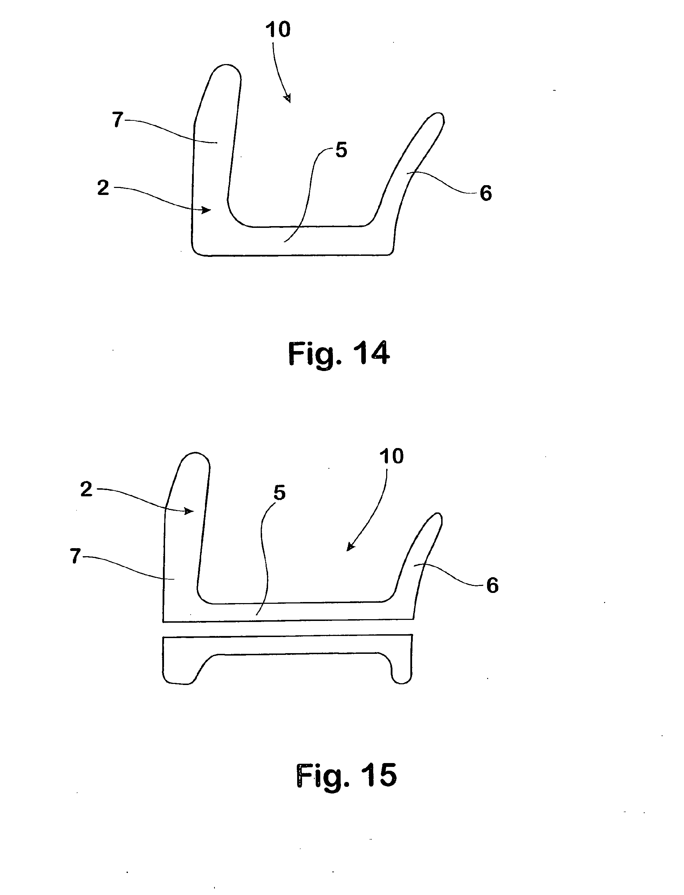

The guard 1 comprises broadly a base member 2 having teeth engaging elements 3, 4 mounted on upper and lower surfaces of the member 2. This embodiment is thus a double arch appliance. A single arch guard that fits over the upper teeth will be described below with reference to Figs 12 to 15.

The base member 2 has a broadly U-shaped configuration to complement the U-shape of the arch of a user. The base member 2 has a central web 5 and inner and outer flanges 6 and 7 projecting upwardly and downwardly from both the inner and outer edges of the web 5. The web 5 and the flanges 6 and 7 collectively define upper and lower channels 10 and 11 within which respectively the upper and lower teeth engaging elements 3 and 4 are positioned.

The base member 2 is made of a substantially rigid plastics material that is polyethylene. This has a suitable level of rigidity, hardness and durability while still permitting some limited flexing to accommodate different arch widths. The polyethylene may be high density polyethylene (HDPE). A suitable high density polyethylene can be obtained from plastics suppliers such as Exxon Mobil Chemical Company. The material is generally supplied as a resin. The softening point of the resin is above 100°C.

The teeth engaging elements 3, 4 are formed by a layer of thermoplastics material that is EVA (ethyl vinyl acetate) that encloses and encapsulates the base member 2. The layer has a thickness of 1 mm to 3mm, typically about 2mm. EVA has the property that it softens when it is heated to 90°C to 95°C. This enables it to be shaped to conform to the arch and teeth of a user as will be described in more detail below.

In the illustrated embodiment the layer of EVA extends fully across the surface area of the base member and encases the base member continuously without any interruption, ie without any gaps or spaces.

The EVA appears to have some positive attachment to the polyethylene of the base member. Further the attachment of the layer of EVA to the base member is enhanced by the fact that it encases the base member continuously and extends across the full surface area of the base member. This helps to resist delamination of the two materials during of the appliance.

Each of the tooth engaging elements 3, 4 also has a broadly U-shaped configuration when viewed in plan view. This complements the general shape of the base member 2. Each element 3, 4 also has a broadly U-shaped cross-sectional configuration with a bottom wall 15 and two side walls 16 and 17. The shape and width of the channels defined in the base member 2 has been specifically designed so as to enable the appliance to accommodate widely varying jaw widths and thereby be capable of being fitted to a large number of patients.

The appliance also includes a notch or cut-out 35 in the upper surface of the outer flange 7. The notch 35 has the important function of permitting inward or outward adjustment of the arms of the U-shaped member without causing distortion of the appliance 10. This enables a single appliance to fit patients with different arch sizes.

The guard has a tongue tag 25 for positioning the tongue of a user in a central position during use. The guard also has a number of holes 30 defined therein in the central region thereof that permit mouth breathing by a user. This is often required when playing sports.

A further feature of the guard is that the web of the member thickens from the front of the member to a point towards the rear of the base member just prior to the rear of the member. After this point the member starts thinning down again. This tends to fill in the space between the teeth of the upper and lower jaw. This in some respects resembles an aerofoil and thickens the member. This feature is described in detail in the applicant's earlier US Patent Nos 5,259,762 and 5,624,257, the contents of which are incorporated directly herein by cross reference.

The guard is injected moulded in a two-stage injection moulding process. The base member is injection moulded in a first die from polyethylene. The base member is then removed from the first die and locked into a second die in which the EVA layer is injection moulded onto the base member. The base member is held in position by locking elements which are pins. It is particularly important that the base member does not move or flex when the layer of EVA is injection moulded onto it. The base member described above has been found to fully satisfy these requirements.

In use, the sports guard may easily be fitted in a domestic environment. This is done by immersing the guard in boiling water which causes the EVA to soften. Typically, this only takes a few minutes. The base member remains rigid at this temperature. Thereafter the guard is placed in the user's mouth where it moulds and conforms to the arch and teeth of the user's mouth. As it cools to body temperature in the mouth of the user it hardens in the shape that it is forced into and is therefore customised to fit snugly in the mouth of a user.

During actual use of the sports guard it will be subjected to bending and twisting that will tend to cause delamination of the layer and member if they are not firmly attached together. The guard resists delamination due to the encasement of the base member within the layer and the compatibility of polyethylene within EVA. These two materials bend and flex together with comparable degrees of elasticity and extension.

The layer of EVA is relatively thin so the guard is not excessively bulky in a user's mouth. This is an important feature that enables users to talk while they are wearing the guard. Talking is an important part of playing some contact sports.

In earlier versions of these types of products the Applicant produced the base member from high density polyethylene without any other components mixed in with the plastics material. However Applicant has now produced a base member containing 93-97 % by weight of polyethylene and 3-7 % by weight of EVA. The EVA is blended in with the polyethylene at an early stage when the plastics are still being mixed. Applicant has found that the EVA makes the base member more flexible while still enabling it to perform its function.

Applicant has experimented with varying levels of EVA and has found that a base member with up to 20% by weight of EVA produces fair results. If more than 20% of EVA is contained in the base member it becomes too soft and flexible. Noticeably better results are obtained with not more than 10% by weight of EVA. Applicant currently prefers up to 10% by weight of EVA in his base members and feels that they offer better performance than the base members made solely of polyethylene.

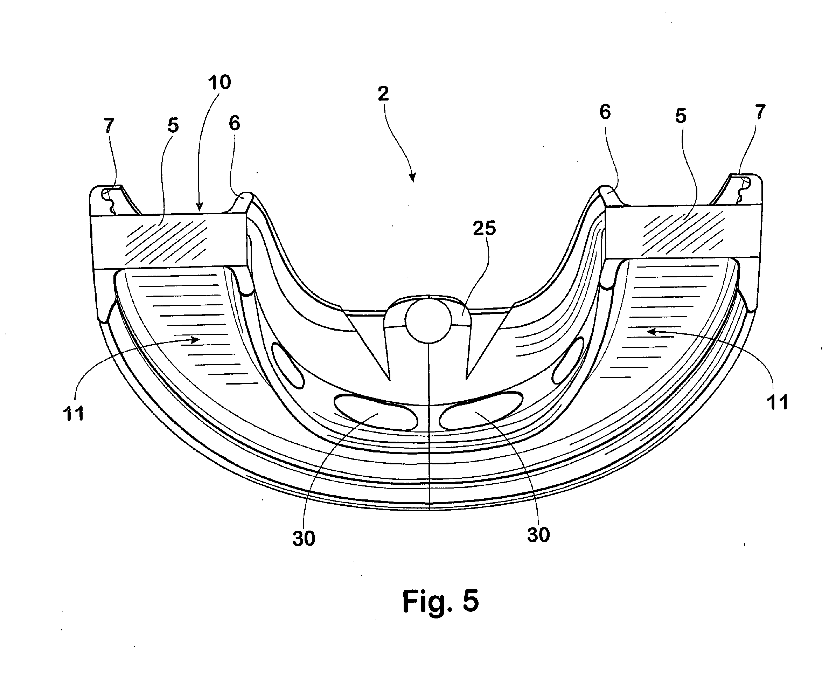

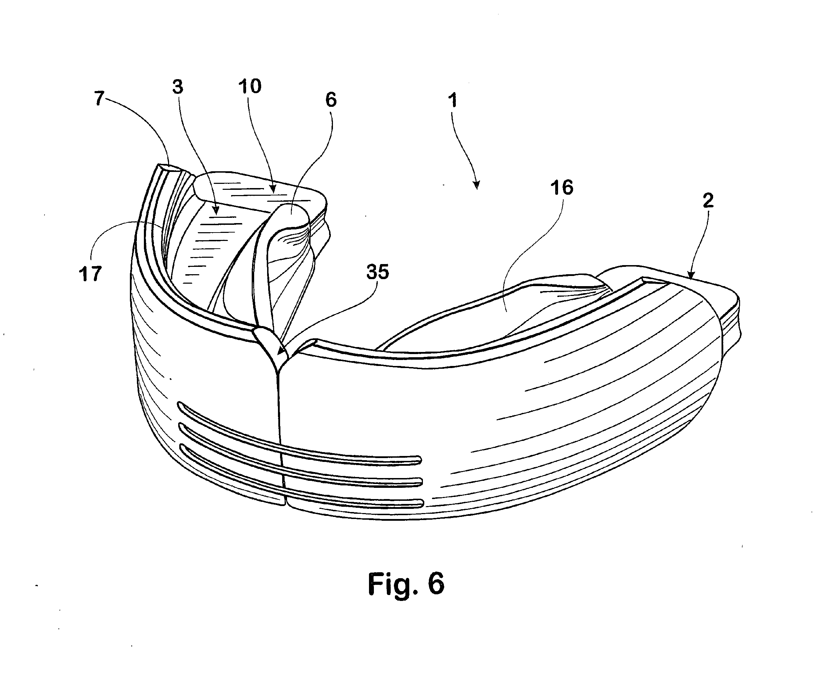

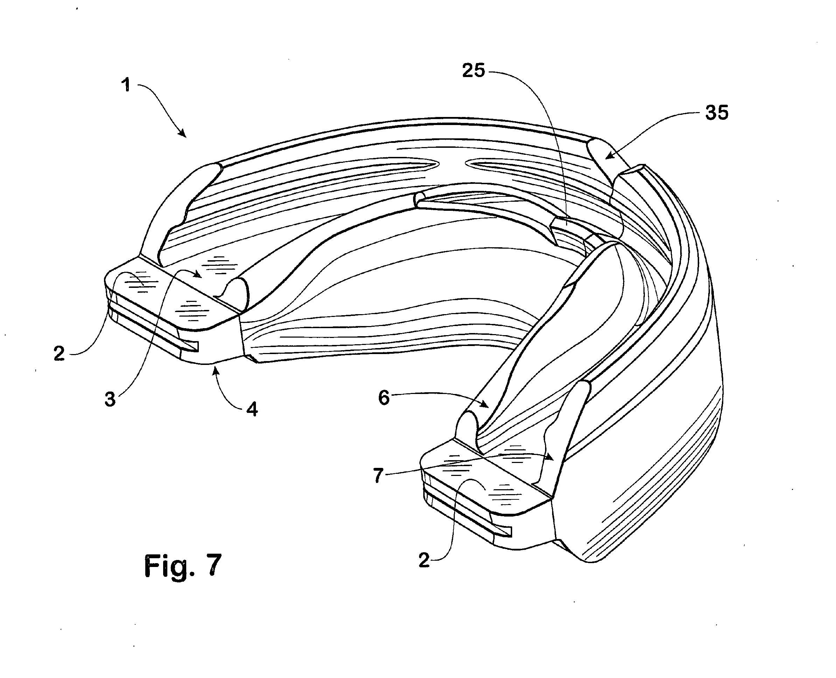

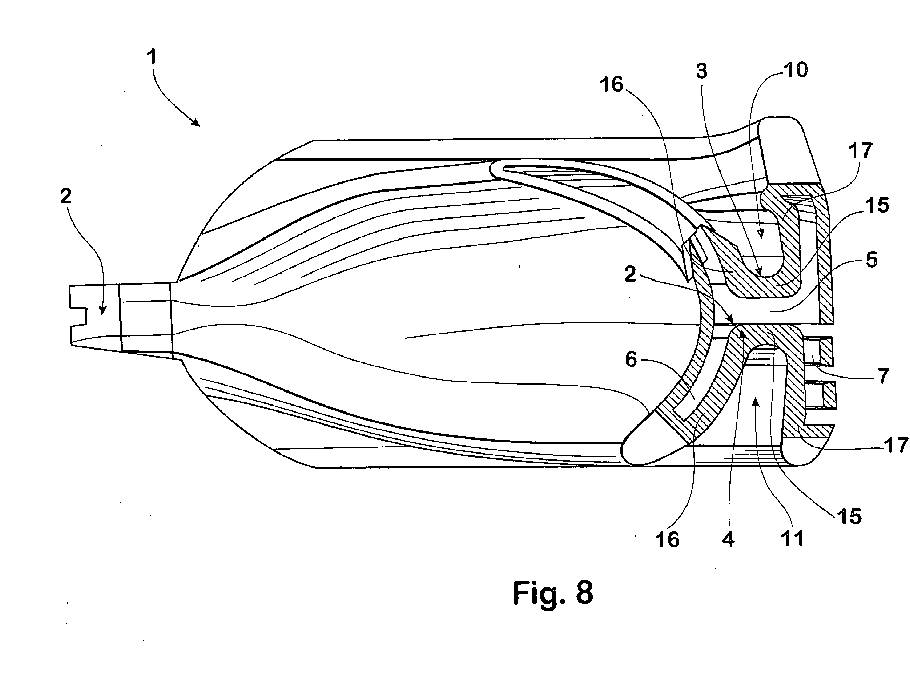

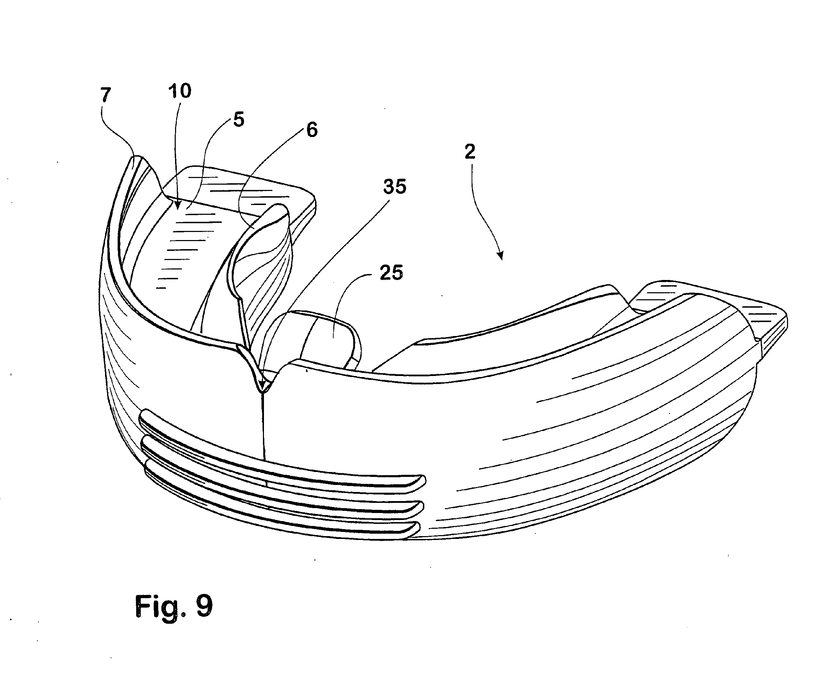

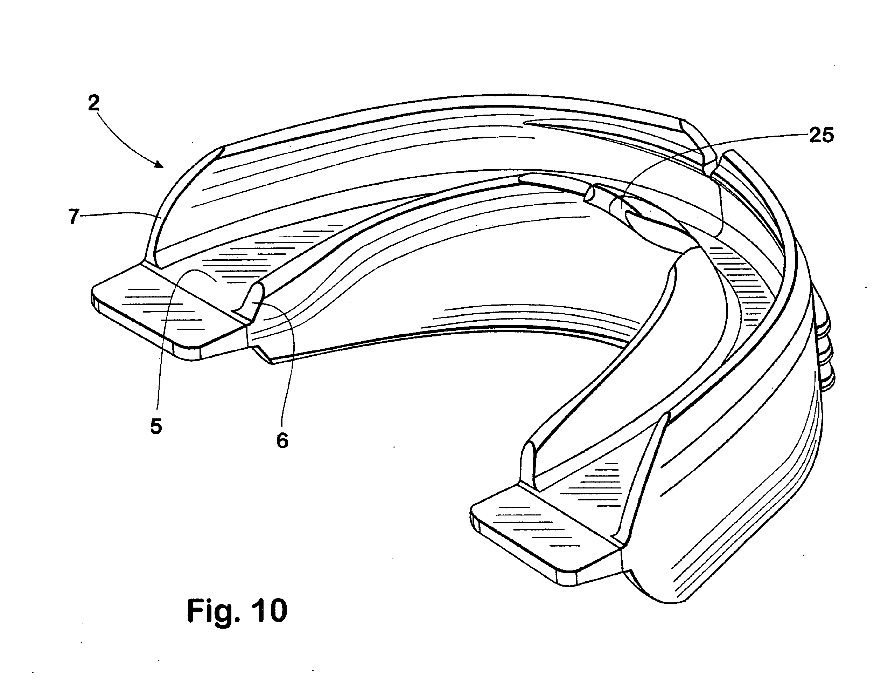

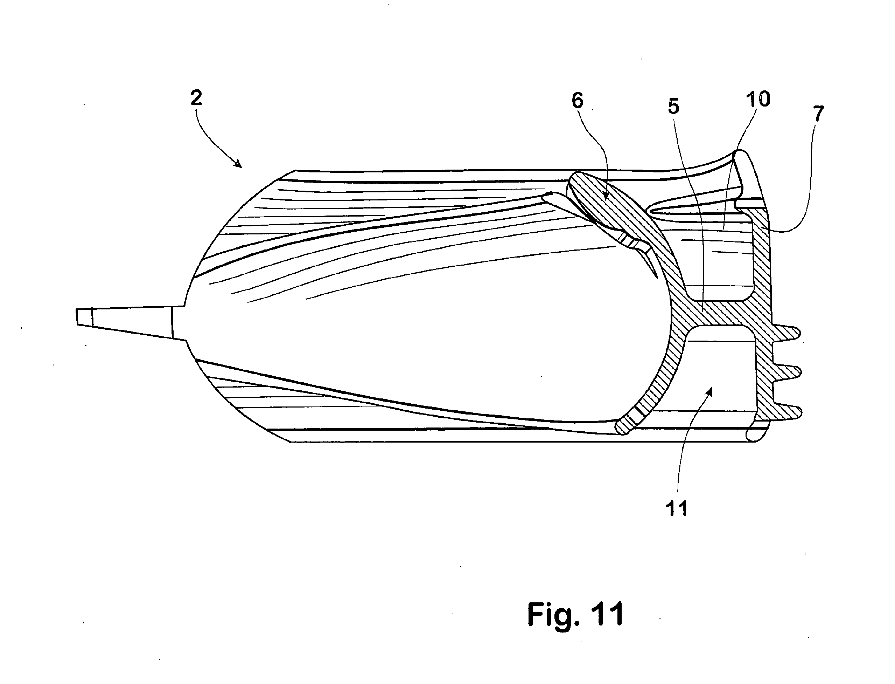

In a second embodiment of the invention illustrated in Figs 5 to 11, the appliance is used for orthodontic treatment. The orthodontic appliance is the same as that illustrated in Figs 1 to 5 with the exception that it does not have breathing holes, eg for mouth breathing, and the base element 2 is thinner, eg having an approximate thickness of 2mm to 4mm. It can be thinner because it does not have the same requirements of mechanical strength as the sports guard. The orthodontic appliance is used for myofunctional training and tooth alignment. Myofunctional training is a clinical procedure which is designed to correct bad oral habits, eg tongue thrusting, mouth breathing, incorrect swallowing and the like.

In use the appliance is initially fitted by a dentist or orthodontist in a dental surgery. The shape of the elements 3, 4 prior to use corresponds broadly to an ideal positioning or "bite" of a patient's teeth. To enable the elements 3, 4 to be tailored to a patient's specific teeth, the elements 3, 4 are dipped into boiling water to soften the elements and then inserted into a patient's mouth to mould them to the specific contours of a patient's mouth.

The EVA material from which the elements 3, 4 are formed has a memory so that it reverts to its original shape when reheated. It reverts partly to its original shape when heated to 60°C to 65°C and fully to its original shape when heated above 90°C.

The memory properties of the EVA enable the elements 3, 4 to be used to progressively correct misalignment of a patient's teeth. For example at spaced time intervals, the dentist will typically place the appliance into water at a temperature of 60°C to 65°C which causes the elements 3, 4 to partly revert to their original shape. The slightly altered shape brought about by this remoulding causes the appliance to apply pressure to the teeth of a user to correct misalignment. This can be done several times until the patient's teeth take up the correct position or the ideal "bite" position.

When the teeth are in the correct position the appliance can be placed into water at 90°C to 95°C which causes it to revert to its original position. The appliance can then be used as a retaining device for retaining the teeth in the correct position and also for carrying out myofunctional training.

Figs 12 to 15 illustrate an appliance in accordance with a second embodiment of the invention that is a sports guard. Unless otherwise indicated the same reference numerals will be used to indicate the same components. The major difference between this embodiment and the earlier embodiment is that this embodiment only defines an upper channel within which the upper arch of a user is received. The guard will generally be used in contact sports where it acts to resist damage to the teeth and jaw of a user. In particular the guard protects the vulnerable front incisor teeth and the temporomandibular (TMJ) joint of a user.

Subject to these differences the sports guard comprises the same structural features as the appliance illustrated in Figs 1 to 11. It comprises a base member made at least primarily of polyethylene that is encapsulated in a layer of EVA material. In use when the guard is fitted the EVA material is softened by placing it in hot water and is then placed in a user's mouth to shape it to the arch and teeth of a user. As with the earlier embodiment Applicant has found that a base member formed of polyethylene and having up to 10% by weight of EVA produces excellent results.

This process of moulding the guard to fit the teeth and arch of a user involves heating the guard up and then cooling it down. Applicant has found that polyethylene and EVA are compatible with each other when undergoing this process and do not delaminate. Further when the appliance is subjected to flexing in use the polyethylene and EVA are able to flex together and resist delamination.

Without being bound by theory Applicant believes that the levels of thermal expansion of the materials are compatible with each other. Also the ability of the materials to flex or stretch at their interfacing surfaces is comparable.

An advantage of the sports guard described above is that when the guard is heated in water it does not change or lose its basic shape. This is because the base member is sufficiently strong and rigid to resist this. The hard base member forces the layer of thermoplastic material against the teeth where it conforms to the contours of the teeth. These guards which are essentially mass produced and are one size fits all produces an excellent fit that is comparable to that achieved with custom made guards produced by taking impressions of a user's mouth and jaw.

A further advantage of the guard described in this application is that it can be remoulded to maintain optimum fit should the fit become loose for any reason. The guard is simply heated again in boiling water and then returned to the mouth of the user where it is reshaped to restore optimum fit. Prior art custom made sports guards of which the applicant is aware are not able to do this.

A further advantage of the guard described above is that it has the ability to spread the force from a blow or impact to the front of the guard across the full body of the guard. It does this because the base member is sufficiently rigid not to deform locally when such an impact occurs. Rather the entire guard absorbs the impact and tends to move in response thereto. By spreading the force over the entire mouth of a user rather than the fragile front teeth, the risk of injury to the front teeth is considerably reduced. The rear molars have a number of extensive roots and are thicker and more robust than the front teeth. They are therefore better adapted to withstand a strong blow to the mouth. Many prior art sports guards do not have this ability. They tend to bend or deform locally in response to a frontal impact, transferring the force of the blow directly to the front teeth.

A further advantage of the guard described above is that the web has an aerofoil shape on each side of the arch extending from the front towards the rear of the arch. The aerofoil fills in the space between the upper and lower teeth and provides support to the TMJ joint. Applicant believes that this feature assists in transferring the shock of a blow to the front of the jaw to all the teeth and from the teeth through to the skull, rather than concentrating the impact at the TMJ. The rigid base member that cannot easily be deformed provides an appropriate level of support to the TMJ joint.

It will of course be realised that the above has been given only by way of illustrative example of the invention and that all such modifications and variations thereto as would be apparent to persons skilled in the art are deemed to fall within the broad scope and ambit of the invention as herein set forth.

## Claims

1. An oral appliance for placing in a mouth of a user, the appliance comprising:
a base member having a generally U-shaped form corresponding to the outline of a jaw of a user, the base member defining at least one channel within which an upper or lower row of teeth of a user can be received, wherein the base member is formed at least primarily from a rigid plastics material which is polyethylene which is not user conformable or mouldable in boiling water; and
a teeth engaging element, associated with each channel, being made of a material able to be user conformed or user moulded to suit the individual mouth of the user, the base member having a greater rigidity than the teeth engaging element.

2. An oral appliance according to claim 1, wherein the teeth engaging element is made of a continuous layer of thermoplastic material that encompasses the base member to firmly and securely mount the layer of thermoplastic material on the base member.

3. An oral appliance according to claim 1 or claim 2, wherein the layer of material substantially covers the complete surface area of the base member, and wherein the continuous layer of thermoplastics material comprises EVA (ethylvinylacetate) which softens at a temperature of 90°C - 95°C

4. An oral appliance according to any one of the preceding claims, wherein the base member which is formed primarily of polyethylene also includes a thermoplastic material having a greater flexibility than polyethylene.

5. Oral appliance according to claim 4, wherein the base member comprises not more than 20% by weight of the thermoplastic material, preferably not more than 10% by weight of the thermoplastic material, preferably 2-9 % by weight of the thermoplastic material, and most preferably 4-8% by weight of the thermoplastic material.

6. An oral appliance according to claim 4 or claim 5, wherein the thermoplastic material in the base member is EVA.

7. An oral appliance according to any one of claims 1 to 3, wherein the base member consists essentially of a rigid plastics material which is polyethylene.

8. An oral appliance according to any one of the preceding claims, wherein the base member has inner and outer flanges interconnected by a web which collectively define upper and lower channels within which the upper and lower rows of teeth of the user are receivable, and wherein an upper teeth engaging element is received in the upper channel and a lower teeth engaging element is received in the lower channel.

9. An oral appliance according to any one of the preceding claims, wherein the base member has inner and outer flanges interconnected by a web which collectively define an upper channel within which the upper row of teeth of the user are receivable, and wherein an upper teeth engaging element is received in the upper channel.

10. An oral appliance according to any one of the preceding claims, wherein a tongue tag is formed on the inner flange of the base member, the tongue tag being substantially centrally positioned for correctly positioning the tongue of a user during use, and wherein the base member has breathing apertures defined therein for facilitating breathing by a user when wearing the appliance and wherein the base member defines a cut-out or recess in the outer flange for permitting the spacing of opposing sides of the base member to be adjusted.

11. An oral appliance comprising:
a base member made of polyethylene having a generally U-shaped form corresponding to the outline of the arch of a user, the base member having inner and outer flanges interconnected by a web that defines at least one channel within which a row of teeth of a user are received; and
a continuous layer of thermoplastic material that is EVA that surrounds and encases the base member and attaches to the base member whereby to define a teeth engaging element within each channel, the thermoplastic material being capable of being moulded and shaped to suit the arch and teeth of a user which are received therein by heating to a certain temperature.

12. A method of manufacturing an oral appliance for placing in the mouth of a user, the method comprising:
moulding a base member from plastic material in a first moulding step in a first mould, the member having a generally U-shaped form corresponding to the outline of the jaw of a user and inner and outer flanges interconnected by a web which define at least one of upper and lower channels within which the corresponding rows of teeth of a user are received, wherein the base member is formed at least primarily from a rigid plastic material which is polyethylene; and
moulding a continuous layer of thermoplastic material onto the base member to form said at least one of upper and lower teeth engaging elements capable of being customised to suit the mouth of a user, the layer encasing the base member to thereby firmly and securely mount the layer of thermoplastic material on the base member.

13. A method according to claim 12, wherein the continuous layer of thermoplastic material is moulded onto the base member in the first mould after the first moulding step has been completed.

14. A method according to claim 12, wherein the base member is removed from the first mould after the moulding thereof and placed in a second mould having a larger mould cavity and then said continuous layer of plastics material is moulded onto said base member.

15. A method according to any one of claims 12 to 14, wherein the continuous layer of thermoplastic material is moulded substantially fully across the surface area of the base member in said second moulding step.

16. A method according to any one of claims 12 to 15, wherein the layer of thermoplastic material is formed of EVA.

17. A method according to any of claims 12 to 16, wherein the base member comprises not more than 20% by weight of the thermoplastic material, preferably not more than 10% by weight of the thermoplastic material, preferably 2-9 % by weight of thermoplastic material, and most preferably 4-8% by weight of the thermoplastic material.

18. A method of making an oral appliance, the method including:
moulding a base member from polyethylene in a first moulding step in a first mould, the member having a generally U-shaped form corresponding to the outline of the jaw of a user and inner and outer flanges interconnected by a web that defines at least one channel within which an arch and associated row of teeth of a user are received; and
removing the base member from the first mould and placing it in a second mould having a larger cavity than the first mould and moulding a continuous layer of thermoplastic material that is EVA onto the base member so that the base member is encased by and enclosed within the EVA to form a teeth engaging element within each channel that can be formed and shaped to suit the mouth of a user, the layer encasing the base member and bonding to the base member to form an integral body that resists delamination during use.

19. A base member for an oral appliance for placing in a mouth of a user, the base member having a generally U-shaped form corresponding to the outline of a jaw of a user, and defining at least one channel within which an upper or lower row of teeth of a user can be received; and wherein the base member is formed at least primarily from a rigid plastics material which is polyethylene which is not user conformable or mouldable in boiling water.
